# EUROPEAN PATENT APPLICATION

(11) **EP 2 244 196 A1**
(43) Date of publication of application: **27.10.2010**
(21) Application number: 10160360.3
(22) Date of filing: 19.04.2010
(51) Int. Cl.: G06F 17/30

(54) **Search screen providing method and display apparatus using the same**

(30) Priority: 21.04.2009 KR 20090034812
(71) Applicant: Samsung Electronics Co., Ltd., Suwon-si, Gyeonggi-do 442-742 (KR)
(72) Inventor: Kim, Jung-dae, Seoul (KR)
(74) Representative: Land, Addick Adrianus Gosling

(57) **Abstract**

A method for providing a search screen and a display apparatus using the same are provided. The method includes generating information regarding files contained in a first folder and information regarding files contained in a second folder, and displaying the generated information on a search screen. Therefore, it is possible for a user to search for a desired file more quickly, and to move a file between folders more easily and conveniently.

## Description

This application claims priority from Korean Patent Application No. 10-2009-00034812, filed on April 21, 2009, in the Korean Intellectual Property Office, the disclosure of which is incorporated herein by reference in its entirety.

Apparatuses and methods consistent with exemplary embodiments relate to providing a search screen and a display apparatus, and more particularly, to providing a search screen, which shows one or more files contained in each of a plurality of folders having a hierarchical structure, and a display apparatus using the same.

Recently, functions of video apparatuses are being diversified and complicated, as a result of the rapid development of the storage capacity of video apparatuses.

Additionally, the recent development of storage capacity of video apparatuses has enabled video apparatuses to provide an enormous number of menu screens. Due to an increase in the number of menu screens provided by video apparatuses, menu screens arranged in a hierarchical structure (namely, a tree structure) are being widely used in order for users to easily search for a menu screen on which a desired file is displayed.

Users need to perform a search manipulation to call a menu screen of a desired folder in order to search for a desired file. Herein, the search manipulation refers to searching for a desired file while monitoring a plurality of screens for a plurality of folders in sequence from the highest level to the lowest level.

However, the search manipulation may be troublesome to users. This trouble may increase when folders are arranged in a complicated hierarchical structure.

Additionally, in the case when a user could not find the desired file even through the search manipulation, there is a problem that he or she needs to re-search for the desired file while monitoring the plurality of screens for the plurality of folders in sequence from the lowest level to the highest level.

If a large number of search manipulations are required to call a folder containing a file which a user desires to search for, user's inconveniences may be increased due to a large number of search manipulations.

Exemplary embodiments overcome the above disadvantages and other disadvantages not described above. Also, the present invention is not required to overcome the disadvantages described above, and an exemplary embodiment may not overcome any of the problems described above.

Exemplary embodiments provide a method for providing a search screen to enable a user to more quickly and easily search for one or more files contained in each of a plurality of folders having a hierarchical structure, and a display apparatus using the same.

According to an aspect of the exemplary embodiments, there is provided a method for providing a search screen, the method including generating first file information regarding a plurality of files contained in a first folder among a plurality of folders having a hierarchical structure, and second file information regarding a plurality of files contained in a second folder different from the first folder; and displaying the first file information together with the second file information on a single search screen.

The first folder may be a highest-level folder or a folder selected by a user.

The second folder may include all subfolders under the first folder.

The second file information may include file information regarding each of a plurality of files contained in each of all the subfolders under the first folder.

The displaying may include grouping and displaying the first file information and the second file information according to the same lowest-level folder among folders containing files corresponding to the first file information and the second file information.

The first file information and the second file information may be arranged, so that file information in the same group may be grouped, the grouped file information may be arranged in a first direction and file information in the same group may be arranged in a second direction.

The method may further include moving an indicator for selecting a group in the first direction, if a first manipulation signal is input; and moving an indicator for selecting file information contained in the selected group in the second direction, if a second manipulation signal is input.

The displaying may include displaying information regarding the hierarchical structure together with the search screen.

The displaying may include displaying information regarding the hierarchical structure on the search screen using at least one of a color, a size and a location of the first file information and second file information. If "at least one of" is used in a context such as "at least one of A, B, and C," then such context is intended to mean (A), (B), (C), (A,B), (A,C), (B,C), or (A,B,C).

The number of the first file information or the number of the second file information may be changed according to the number of files contained in the first folder or the number of files contained in the second folder.

The plurality of files may include a plurality of content files, and the first file information and second file information may include file names or thumbnail images of files respectively corresponding to the first file information and second file information.

According to another aspect of the exemplary embodiments, there is provided a method for providing a search screen, the method including generating first file information regarding a plurality of files contained in a first folder among a plurality of folders having a hierarchical structure, and second file information regarding a plurality of files contained in a second folder different from the first folder; and displaying a search screen on which the first file information and the second file information are capable of being selected.

According to another aspect of the exemplary embodiments, there is provided a method for providing a search screen, the method including extracting files contained in folders in levels between a highest level and a lowest level from among a plurality of folders having a hierarchical structure; generating file information regarding each of the extracted files; and displaying a search screen on which the generated file information is grouped according to whether or not the extracted files are contained in the same lowest-level folder.

According to another aspect of the exemplary embodiments, there is provided a method for providing a search screen, the method including displaying a search screen so that file information contained in the same folder is arranged in the same row and file information contained in different folders is arranged in different rows; and changing a folder and selecting the changed folder if an up and down manipulation command is input, and changing file information and selecting the changed file information if a left and right manipulation command is input.

According to another aspect of the exemplary embodiments, there is provided a display apparatus including a display unit which displays a search screen; and a controller which generates first file information regarding a plurality of files contained in a first folder among a plurality of folders having a hierarchical structure, and second file information regarding a plurality of files contained in a second folder different from the first folder, and which displays the first file information together with the second file information on a single search screen.

The first folder may be a highest-level folder or a folder selected by a user.

The second folder may include all subfolders under the first folder.

The second file information may include file information regarding each of a plurality of files contained in each of all the subfolders under the first folder.

The controller may control the first file information and the second file information to be grouped and displayed according to the same lowest-level folder among folders containing files corresponding to the first file information and the second file information.

The controller may control the first file information and the second file information to be arranged, so that file information in the same group may be grouped, the grouped file information may be arranged in a first direction and file information in the same group may be arranged in a second direction.

The display apparatus may further include a manipulation unit which receives a first manipulation signal and a second manipulation signal. The controller may move an indicator for selecting a group in the first direction if the first manipulation signal is input. Additionally, the controller may move an indicator for selecting file information contained in the selected group in the second direction, if the second manipulation signal is input.

The controller may control information regarding the hierarchical structure to be displayed together with the search screen.

The controller may control information regarding the hierarchical structure to be displayed on the search screen using at least one of a color, a size and a location of the first file information and second file information.

The number of the first file information or the number of the second file information may be changed according to the number of files contained in the first folder or the number of files contained in the second folder.

The plurality of files may include a plurality of content files, and the first file information and second file information may include file names or thumbnail images of files respectively corresponding to the first file information and second file information.

According to another aspect of the exemplary embodiments, there is provided a display apparatus including a display unit which displays a search screen; and a controller which generates first file information regarding a plurality of files contained in a first folder among a plurality of folders having a hierarchical structure, and second file information regarding a plurality of files contained in a second folder different from the first folder, and which controls the display unit to display a search screen on which the first file information and the second file information are capable of being selected.

According to another aspect of the exemplary embodiments, there is provided a display apparatus including a display unit which displays a search screen; and a controller which extracts files contained in folders in levels between a highest level and a lowest level from among a plurality of folders having a hierarchical structure, generates file information regarding each of the extracted files, and controls the display unit to display a search screen on which the generated file information is grouped according to whether or not the extracted files are contained in the same lowest-level folder.

According to another aspect of the exemplary embodiments, there is provided a display apparatus including a manipulation unit which receives an up and down manipulation command and a left and right manipulation command; and a controller which controls a file search screen to be displayed, controls a folder to be changed and selected on the file search screen in response to the up and down manipulation command, and controls file information to be changed and selected on the file search screen in response to the left and right manipulation command.

The controller may control a file search screen to be displayed so that file information contained in the same folder may be arranged in the same row and file information contained in different folders may be arranged in different rows.

According to an aspect of the exemplary embodiments, there is a method for providing a search screen, the method including generating first file information regarding a plurality of first files contained in a first folder, and second file information regarding a plurality of second files contained in a second folder, the first and the second folders being of a plurality of folders having a hierarchical structure; and displaying the first file information together with the second file information on a single search screen.

According to another aspect of the exemplary embodiments, there is a method for providing a search screen, the method including: generating first file information regarding a plurality of first files contained in a first folder among a plurality of folders having a hierarchical structure, and second file information regarding a plurality of second files contained in a second folder different from the first folder, the first and the second folders being of a plurality of folders having a hierarchical structure; and displaying a search screen on which the first file information and the second file information on a search screen, wherein one of the first and the second file information are capable of being selected selectable.

According to yet another aspect of the exemplary embodiments, there is a method for providing a search screen, the method including: extracting files contained in folders in at levels between a highest level and a lowest level from among a plurality of folders having a hierarchical structure; generating file information regarding each of the extracted files; and displaying a search screen on which the generated file information is grouped according to whether or not the extracted files are contained in the same lowest-level folders.

According to an aspect of the exemplary embodiments, there is a method for providing a search screen, the method including: displaying a search screen so that file information contained in the same one folder is are arranged in the same one row and file information contained in different folders is another folder are arranged in different rowsanother row; and changing a folder and selecting the changed a selected folder if an up manipulation command and or a down manipulation command is input, and changing file information and selecting the changed a selected file information if a left manipulation command and or a right manipulation command is input.

According to another aspect of the exemplary embodiments, there is a display apparatus including: a display unit which displays a search screen; and a controller which generates first file information regarding a plurality of first files contained in a first folder among a plurality of folders having a hierarchical structure, and second file information regarding a plurality of second files contained in a second folder different from the first folder, the first and the second folders being of a plurality of folders having a hierarchical structure, and which displays the first file information together with the second file information on a single search screen.

According to an aspect of the exemplary embodiments, there is a display apparatus including: a display unit which displays a search screen; and a controller which generates first file information regarding a plurality of first files contained in a first folder among a plurality of folders having a hierarchical structure, and second file information regarding a plurality of second files contained in a second folder different from the first folder, the first and the second folders being of a plurality of folders having a hierarchical structure, and which controls the display unit to display a search screen on which the first file information and the second file information on a search screen, wherein one of the first and the second file information are capable of being selected selectable.

According to another aspect of the exemplary embodiments, there is a display apparatus including: a display unit which displays a search screen; and a controller which extracts files contained in folders in levels between a highest level and a lowest level from among a plurality of folders having a hierarchical structure, generates file information regarding each of the extracted files, and controls the display unit to display a search screen on which the generated file information is grouped according to whether or not the extracted files are contained in the same lowest-level folders.

According to yet another aspect of the exemplary embodiments, there is a display apparatus including: a manipulation unit which receives an up manipulation command and or a down manipulation command and a left manipulation commandand or a right manipulation command; and a controller which controls a file search screen to be displayed, controls a folder to be changed and a changing of a selected folder on the file search screen in response to the received one of the up and the down manipulation commands, and controls file information to be changed and a changing of a selected file information on the file search screen in response to the received one of the left and the right manipulation commands.

### BRIEF DESCRIPTION OF THE DRAWINGS

The above and/or other aspects of the exemplary embodiments will be more apparent by describing with reference to the accompanying drawings, in which:

FIG. 1 is a block diagram of an electronic album according to an exemplary embodiment;

FIG. 2 illustrates a screen displayed on the electronic album according to an exemplary embodiment;

FIGS. 3A and 3B illustrate hierarchical structures provided to explain various examples of a search screen;

FIGS. 4A and 4B illustrate search screens according to an exemplary embodiment;

FIGS. 5A to 5D illustrate search screens according to another exemplary embodiment;

FIG. 6 illustrates a search screen according to another exemplary embodiment;

FIG. 7 illustrates a search screen according to another exemplary embodiment;

FIGS. 8A to 8C illustrate screens showing information regarding a hierarchical structure;

FIG. 9 exemplarily illustrates a search screen displayed when the number of image files is changed;

FIGS. 10A and 10B exemplarily illustrate search screens in order to explain movement of image files; and

FIG. 11 is a flowchart explaining a method for providing a search screen according to another exemplary embodiment.

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the exemplary embodiments can be carried out without those specifically defined matters. Also, well-known functions or constructions are not described in detail since they would obscure the invention with unnecessary detail.

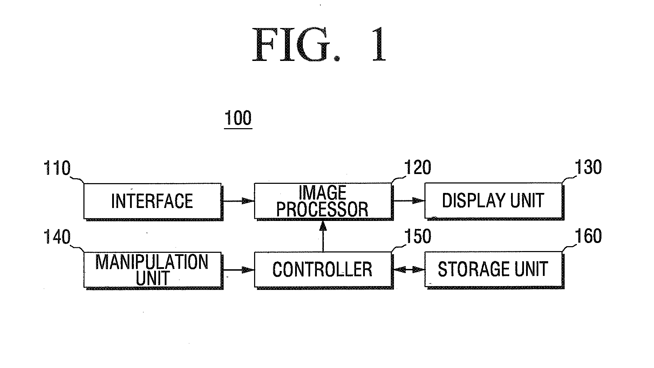

FIG. 1 is a block diagram of an electronic album 100 according to an exemplary embodiment. The electronic album 100 of FIG. 1 is a kind of display apparatus for displaying an image file such as a photo. In FIG. 1, the electronic album 100 comprises an interface 110, an image processor 120, a display unit 130, a manipulation unit 140, a controller 150 and a storage unit 160.

The interface 110 comprises a card reader, to read an image from an external memory card which is detachably mounted to the electronic album 100 and to transfer the read image to the image processor 120. The external memory card may be a secure digital (SD) card, a multimedia card (MMC), a memory stick (MS), an XD picture (XD) card, and a compact flash (CF) card.

The interface 110 also comprises a communication module, to transmit or receive an image to or from an external apparatus which is capable of being connected via wire or wireless to the electronic album 100 and to transfer the image to the image processor 120. The external apparatus may be a universal serial bus (USB).

The image processor 120 performs signal processing, such as decompressing or processing for playback, on the image received via the interface 110 or an image output from the storage unit 160 that will be described below, and converts the processed image into a displayable format.

Additionally, the image processor 120 generates a search screen using the image received via the interface 110 or the image output from the storage unit 160.

The display unit 130 displays the image processed by the image processor 120 or the search screen output from the image processor 120 on a display.

The manipulation unit 140 receives a manipulation command input by a user, and transfers the received manipulation command to the controller 150.

The controller 150 controls the overall operations of the electronic album 100 in response to the manipulation command received by the manipulation unit 140. In more detail, if it is determined that the external memory card or the external apparatus is connected to the interface 110, the controller 150 receives an image stored in the external memory card or the external apparatus via the interface 110.

Additionally, the controller 150 controls the image processor 120 to perform signal processing on the received image and converts the processed image into a displayable format, so that the image with the displayable format is displayed on the display unit 130.

Moreover, the controller 150 controls the image processor 120 to generate a search screen on which information regarding one or more image files contained in each of a plurality of folders stored in the storage unit 160 that will be described below, is arranged. In this situation, the plurality of folders stored in the storage unit 160 have a hierarchical structure. In more detail, according to the control of the controller 150, file information regarding files contained in a predetermined folder among the plurality of folders, and file information regarding files contained in one or more folders under the predetermined folder are caused to be displayed on a single search screen. Hereinafter, "folder" may generically refer to a folder, a subfolder, a sub-subfolder, a sub-sub-subfolder, etc.

The file information may comprise all kinds of information regarding image files, for example a thumbnail image representing an image file and the name of an image file. The predetermined folder may be selected by a user from among the plurality of folders stored in the storage unit 160, or may be a highest-level folder among the plurality of folders stored in the storage unit 160.

Exemplary embodiments are also applicable to a search screen which shows the plurality of folders stored in the storage unit 160 and image files contained in each of the plurality of folders, and to a search screen which shows a plurality of folders stored in the external memory card or the external apparatus and image files contained in each of the plurality of folders. This description may be applied to the following description as well.

The storage unit 160 stores information regarding a program required to control the electronic album 100 and the image received via the interface 110. The storage unit 160 may be referred to as a frame memory, and may be implemented as a flash memory, a hard disk or a digital versatile disc (DVD).

While the electronic album 100 has been described above as a display apparatus, the exemplary embodiments are also applicable to any display apparatus capable of performing the function of the electronic album 100, for example a television (TV), an MPEG audio layer-3 (MP3), a personal computer (PC), a digital multimedia broadcasting (DMB) and a portable multimedia player (PMP).

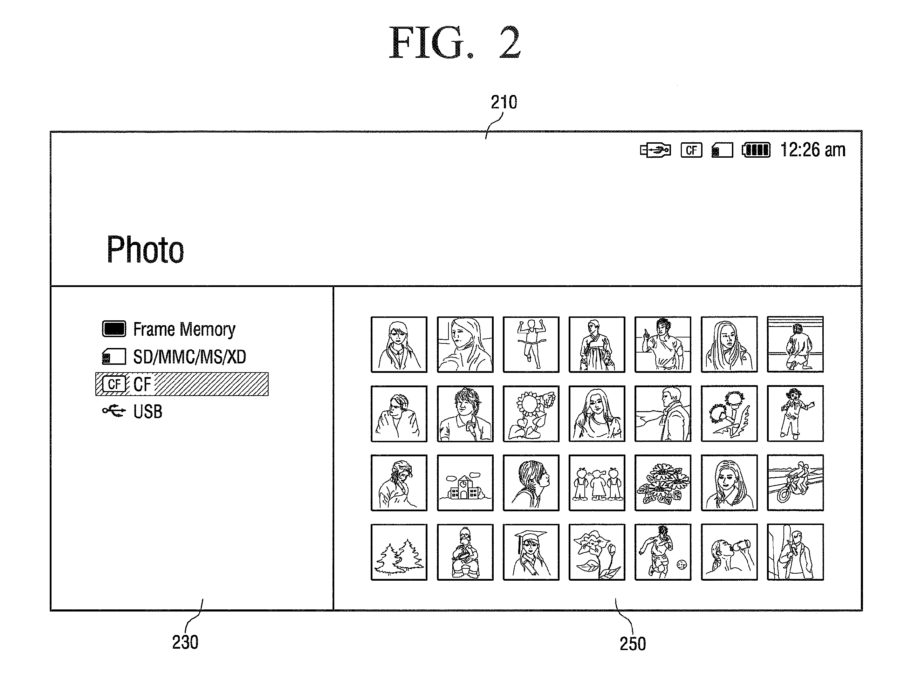

Hereinafter, the above-described search screen is described in more detail with reference to FIG. 2. FIG. 2 illustrates a screen displayed on the electronic album 100 according to an exemplary embodiment.

In FIG. 2, the screen displayed on the electronic album 100 may comprise three frames. A first frame 210 is displayed on an upper side of the screen, and displays the name of the highest-level folder (for example, 'Photo') on a left side thereof. Additionally, the first frame 210 displays on the right side thereof diagrams or symbols representing time information and information regarding external memory cards and external apparatuses which are currently being connected to the electronic album 100.

A second frame 230 is displayed on a left side of the screen, and displays the information regarding external memory cards and external apparatuses which are currently being connected to the electronic album 100. In particular, the second frame 230 displays information regarding a storage means currently selected from among the external memory cards and external apparatuses which are currently being connected to the electronic album 100. As shown in FIG. 2, information regarding a CF is highlighted on the second frame 230, and thus it is possible to know that the CF is currently selected.

A third frame 250 is displayed on a right side of the screen, and displays a search screen for the currently selected storage means. For example, if the CF is currently selected, a search screen for showing a plurality of folders stored in the currently selected CF and image files contained in each of the plurality of folders may be displayed on the third frame 250, as shown in FIG. 2.

In this situation, the image files contained in each of the plurality of folders are all displayed on a single search screen rather than being displayed in a hierarchical structure.

Therefore, it is possible for a user to search for a desired image file more quickly and easily without a need to repeat the search manipulation several times.

The structure of the screen displayed on the electronic album 100 is merely exemplary for convenience of description, and accordingly the present invention is not limited thereto.

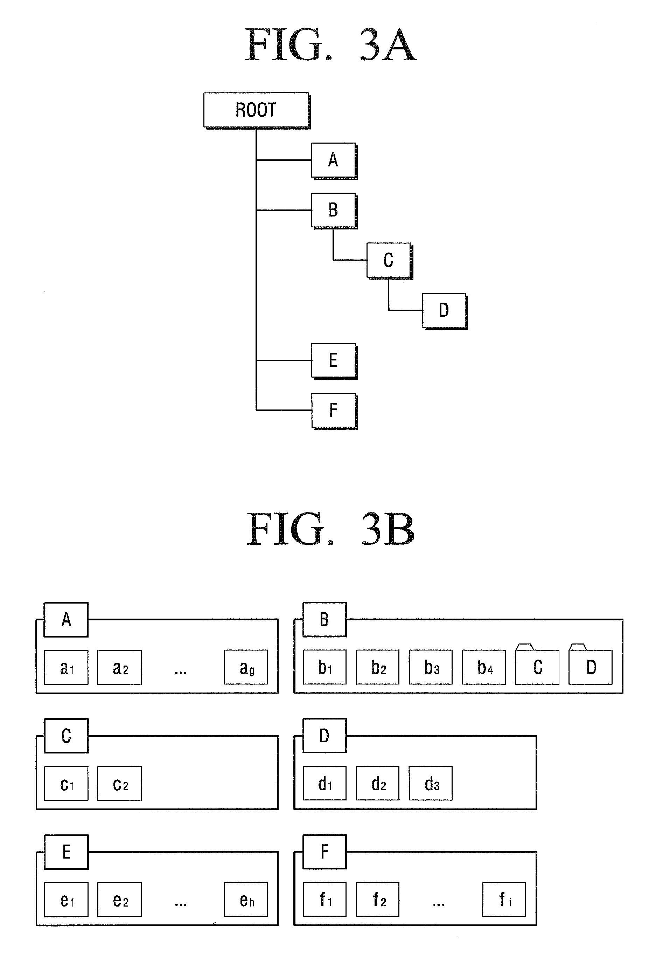

Hereinafter, various examples of the search screen are described with reference to FIGS. 3A to 9.

FIGS. 3A and 3B illustrate hierarchical structures provided to explain various examples of the search screen.

As shown in FIG. 3A, a hierarchical structure comprises 1) highest-level folder 'ROOT', 2) folders 'A', 'B', 'E' and 'F' in the highest-level folder 'ROOT', 3) a folder 'C' in the folder 'B', 4) a folder 'D' in the folder 'C'. Herein, since the folders 'A', 'D', 'E' and 'F' do not have their own subfolders, these folders are referred to as lowest-level folders of the highest-level folder 'ROOT'.

As shown in FIG. 3B, each folder may comprise one or more image files or one or more subfolders. In more detail, a folder 'A' comprises image files 'a1' to 'ag'; a folder 'B' comprises folders 'C' and 'D' and image files 'b1' to 'b4' (e.g., folder 'C' being a subfolder to folder 'B'); a folder 'C' comprises image files 'c1' and 'c2'; a folder 'D' comprises image files 'd1' to 'd3'; a folder 'E' comprises image files 'e1' to 'eh'; and a folder 'F' comprises image files 'f1' to 'fi'.

The electronic album 100 according to the exemplary embodiment enables all the image files contained in each of the plurality of folders having the hierarchical structure to be displayed on a single search screen, so that a user may search for desired files more quickly and easily. Accordingly, if the user enters a search command for the folder 'ROOT', the image files 'a1' to 'ag', 'b1' to 'b4', 'c1' to 'c2', 'd1' to 'd3', 'e1' to 'eh', and 'f1' to 'fi' may be displayed together on a single search screen.

The hierarchical structures shown in FIGS. 3A and 3B to explain various examples of the search screen are merely exemplary, and accordingly, the exemplary embodiments are also applicable to hierarchical structures other than the hierarchical structures shown in FIGS. 3A and 3B. This description may be applied to the following description as well.

Additionally, thumbnail images are displayed as file information regarding image files on the search screen in the exemplary embodiment, but there is no limitation thereto. Accordingly, the file information may comprise, as described above, all kinds of information regarding image files such as the name of the image file, as well as thumbnail images. Hereinafter, the file information regarding image files displayed on the search screen is collectively referred to as a 'file' or 'image file' , and the 'file' or 'image file' is represented by a symbol such as A or a1 instead of a thumbnail image.

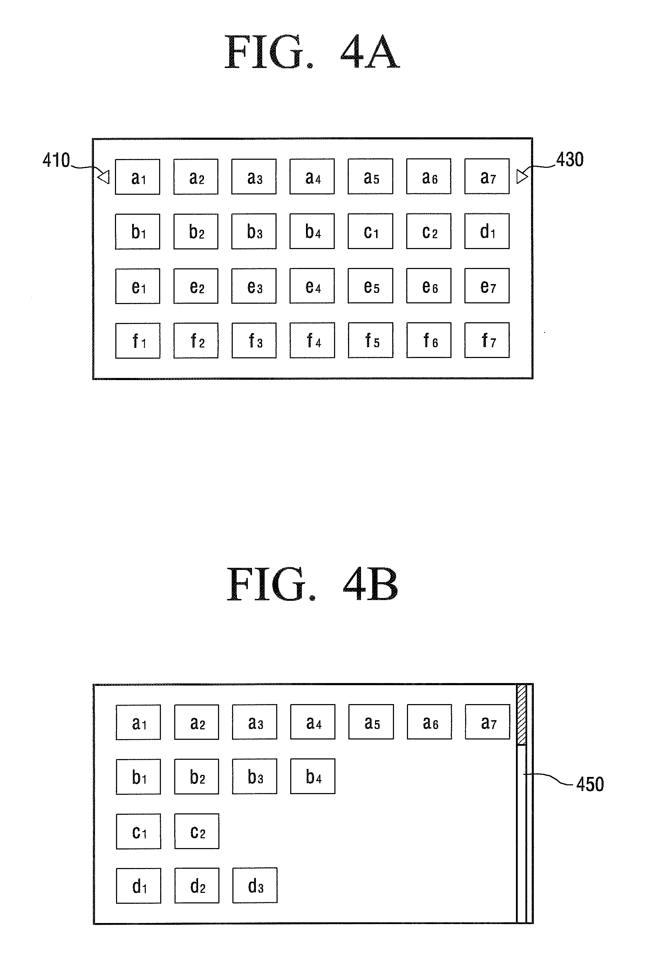

FIGS. 4A and 4B illustrate search screens according to an exemplary embodiment.

As shown in FIGS. 4A and 4B, image files may be arranged according to a predetermined reference. FIG. 4A exemplarily illustrates a search screen on which a plurality of image files are arranged based on a plurality of subfolders of the highest-level folder 'ROOT'.

In FIG. 4A, files contained in folder 'A' of the highest-level folder 'ROOT' are arranged in a first row, and files contained in folder 'B' of the highest-level folder 'ROOT' and subfolders of the folder 'B' are arranged in a second row. Additionally, files contained in folder 'E' of the highest-level folder 'ROOT' are arranged in a third row, and files contained in folder 'F' of the highest-level folder 'ROOT' are arranged in a fourth row.

Herein, the folders 'A', 'E' and 'F' do not contain their own subfolders, but the folder 'B' contains folder 'C' as its subfolder. Folder 'C' contains folder 'D', as its subfolder, as described above, and thus image files contained in the folders 'B', 'C' and 'D' may be arranged in a single row.

Therefore, the plurality of files contained in each of the plurality of folders in the highest-level folder 'ROOT' may be arranged according to a predetermined reference and displayed on a single search screen, and thus it is possible for a user to search for a desired file more easily and conveniently.

If the number of files needing to be arranged in a single row is greater than the number of files capable of being actually displayed on a single row, a left arrow 410 and right arrow 430 may be displayed together with the files, as illustrated in FIG. 4A. Accordingly, a user may search for a desired file by manipulating the manipulation unit 140 to the left or right.

FIG. 4B exemplarily illustrates a search screen on which a plurality of image files are arranged based on a lowest-level folder among the plurality of folders in the highest-level folder 'ROOT'. The lowest-level folder refers to a folder in the lowest level of the hierarchical structure of folders to which a particular image file belongs. For example, file 'c1' can be described as being contained in the highest-level folder 'ROOT', folder 'B' and folder 'C', hence, the folder 'C', which is a sub-subfolder of the folder 'ROOT', is the lowest-level folder. In other words, the lowest-level folder containing the file 'c1' is the folder 'C'.

As shown in FIG. 4B, files contained in folder 'A' as the lowest-level folder are arranged in a first row, and files contained in folder 'B' as the lowest-level folder are arranged in a second row. Additionally, files contained in folder 'C' as the lowest-level folder are arranged in a third row, and files contained in folder 'D' as the lowest-level folder are arranged in a fourth row.

In this situation, if the number of rows to arrange image files according to the lowest-level folder is greater than the number of rows capable of being actually displayed on a screen, a scroll bar 450 may be displayed together with the files on the screen, so that a user may search for a desired file by scrolling the scroll bar 450 up and down.

As described above, the plurality of folders are vertically arranged and the plurality of files are horizontally arranged, and thus the user may manipulate the manipulation unit 140 to the left or right to select files in the folders and may manipulate the manipulation unit 140 up or down to select folders, but this is merely exemplary for convenience of description. In other words, the exemplary embodiments are not limited to up and down manipulation or left and right manipulation. Accordingly, the exemplary embodiments are also applicable to a situation in which a user manipulates the manipulation 140 in two different directions or in two different manners.

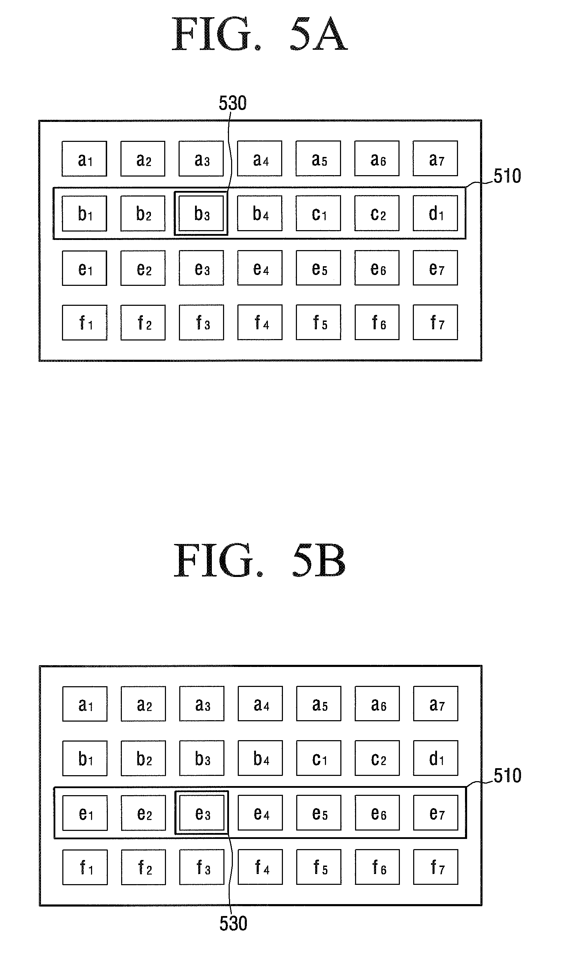

FIGS. 5A to 5D illustrate search screens according to another exemplary embodiment.

In FIGS. 5A to 5C, each of the search screens displays a plurality of image files, together with a group indicator 510 for grouping and selecting image files and an individual indicator 530 for selecting some image files from the grouped image files.

The group indicator 510 is used to select image files in a predetermined group. In the exemplary embodiment of the present invention, the image files in the plurality of folders of the highest-level folder 'ROOT' are grouped and displayed on the search screen. The individual indicator 530 is used to select an individual image file from among the image files indicated by the group indicator 510.

As shown in FIG. 5A, the group indicator 510 may notify a user that the image files contained in folders 'B', 'C' and 'D' are capable of being selected, and the individual indicator 530 may notify the user that file 'b3' is capable of being selected.

Herein, if the user enters a downward movement command by manipulating the manipulation unit 140, the group indicator 510 and the individual indicator 530 may move down to the next row. Accordingly, as shown in FIG. 5B, the group indicator 510 may notify the user that the image files contained in folder 'E' are capable of being selected, and the individual indicator 530 may notify the user that file 'e3' is capable of being selected.

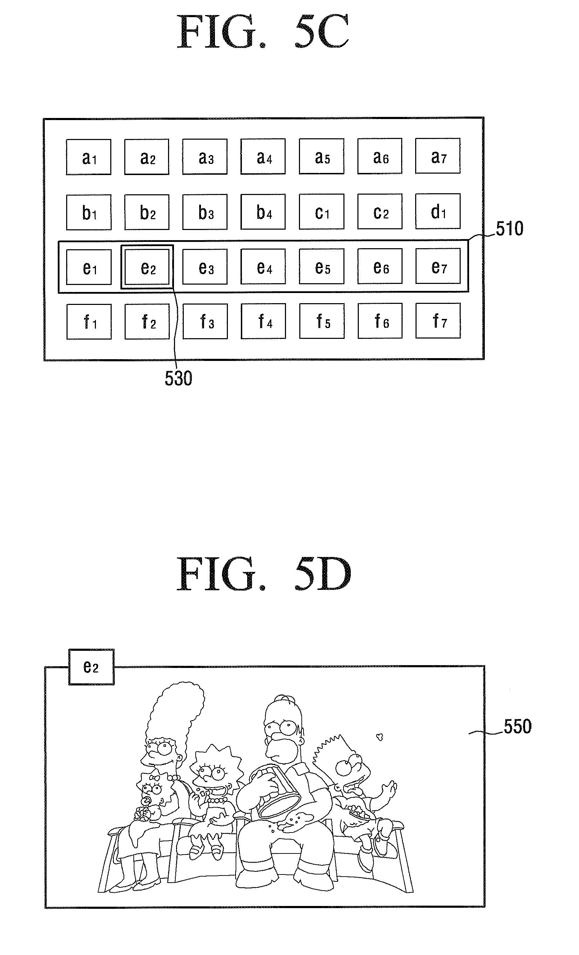

Subsequently, if the user enters a leftward movement command by manipulating the manipulation unit 140, the location of the group indicator 510 may remain unchanged, and the individual indicator 530 may move to image file 'e2' next to the left of file 'e3'. Accordingly, as shown in FIG. 5C, the individual indicator 530 may notify the user that file 'e2' is capable of being selected.

Additionally, if the user enters a selection command by manipulating the manipulation unit 140, the group indicator 510 and the individual indicator 530 may be highlighted, the selected file 'e2' may be played back, and a playback screen 550 may be displayed instead of the search screen, as shown in FIG. 5D.

As described above, the group indicator 510 and individual indicator 530 are merely exemplary to describe a method for selecting files or folders. Accordingly, the exemplary embodiments of the present invention are also applicable to other methods, for example changing colors of files or folders, highlighting files or folders, and changing the size of files or folders.

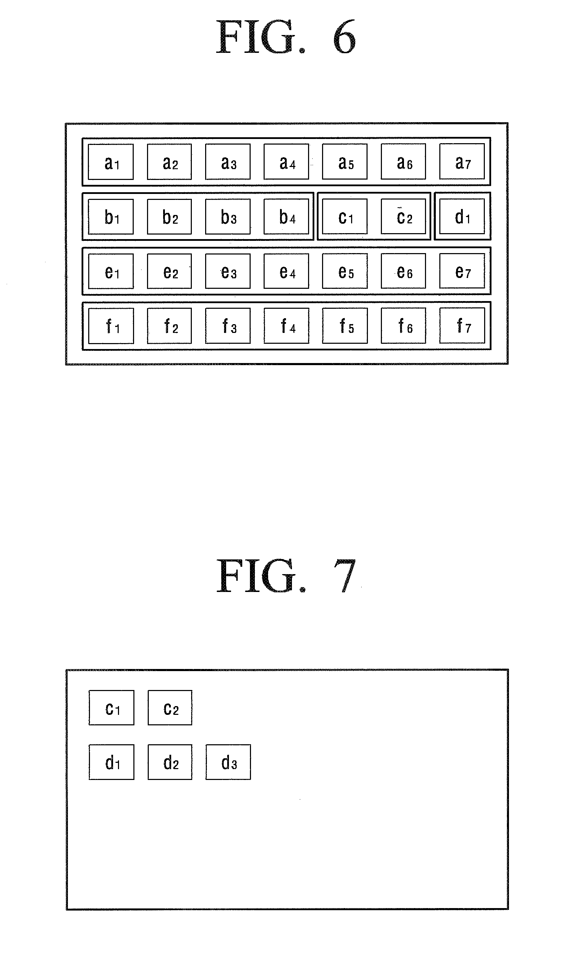

FIG. 6 illustrates a search screen according to another exemplary embodiment of the present invention. The search screen of FIG. 6 displays image files grouped according to the lowest-level folder to which the image files belong.

In this exemplary embodiment of the present invention, a symbol such as a1 or a2 is used instead of a thumbnail image in order to represent an image file, for convenience of description. However, the symbol is actually replaceable with the thumbnail image, so if an image file is represented by a thumbnail image instead of a symbol, it is difficult for a user to intuitively know which folder contains the image file by only viewing the thumbnail image.

Therefore, when all the image files in the plurality of folders of the highest-level folder 'ROOT' are grouped according to the lowest-level folder in which each of the image files is contained, and the grouped image files are displayed on a single search screen, as shown in FIG. 6, it is possible for a user to search for a desired file more easily and conveniently.

While the image files in the plurality of folders of the highest-level folder 'ROOT' are displayed on a signal search screen in the exemplary embodiment of the present invention, there is no limitation thereto. This is now described with reference to FIG. 7.

FIG. 7 illustrates a search screen according to another exemplary embodiment of the present invention. The search screen of FIG. 7 displays files contained in a folder selected by a user.

If it is determined that there are too many files in the plurality of folders in the highest-level folder 'ROOT' to be displayed on a single screen, a user may select a predetermined folder from the plurality of folders, and may cause only files contained in the selected folder to be displayed on a single search screen.

The search screen shown in FIG. 7 may be applied to a situation in which a user does not exactly know where a file which he or she desires to search for is located, but roughly knows the location of the file, that is, knows part of the upper-level folders containing the file.

As shown in FIG. 7, if the user selects a folder 'C', image files contained in the selected folder 'C' and image files contained in a subfolder of the folder 'C' are displayed on a single search screen.

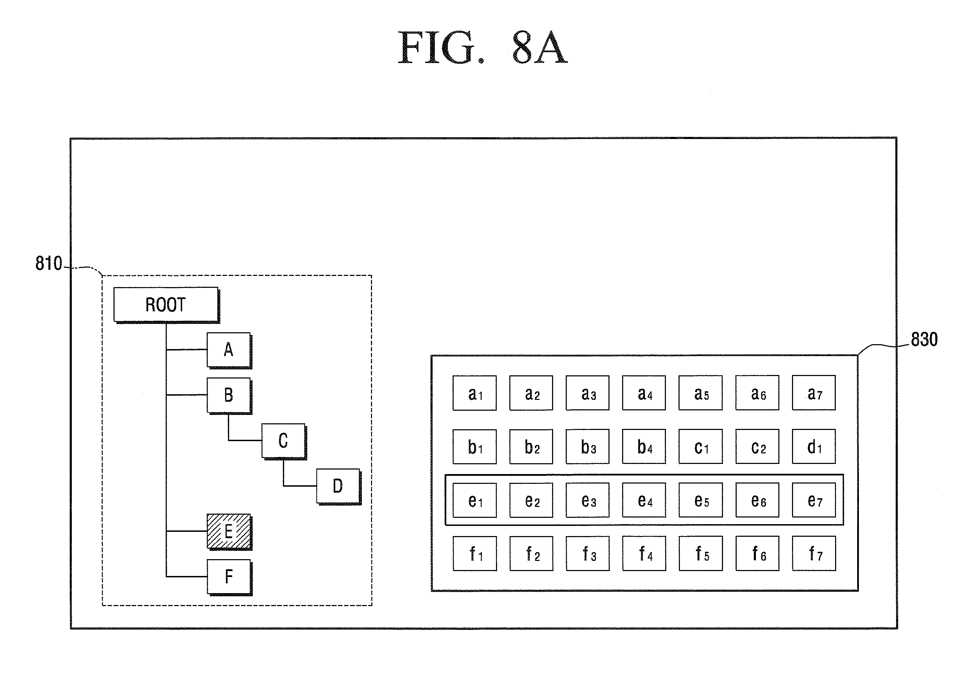

As described above, the search screen may provide the user with information regarding which image files are contained in the same folder, and information whether or not image files are contained in the same lowest-level folder, but there is no limitation thereto. Accordingly, the exemplary embodiments of the present invention are also applicable to a situation in which a search screen is displayed together with information regarding the hierarchical structure or a situation in which the information regarding the hierarchical structure is displayed on the search screen in order to increase user convenience. These situations are now described with reference to FIGS. 8A to 8C.

FIGS. 8A to 8C illustrate screens showing the information regarding the hierarchical structure.

FIG. 8A exemplarily illustrates a screen which comprises a hierarchical structure display field 810 and a search screen 830. Additionally, a folder 'E' is highlighted on the hierarchical structure display field 810, which indicates that the folder 'E' is currently selected or selectable by a user. The search screen 830 displays a plurality of image files and an indicator for indicating that the folder 'E' is currently selected or selectable by the user. In this situation, the indicator on the search screen 830 may indicate image files contained in the highlighted folder on the hierarchical structure display field 810.

The hierarchical structure display field 810 and the search screen 830 are displayed separately, as shown in FIG. 8A, and thus it is possible for a user to search for a desired image file more easily and conveniently.

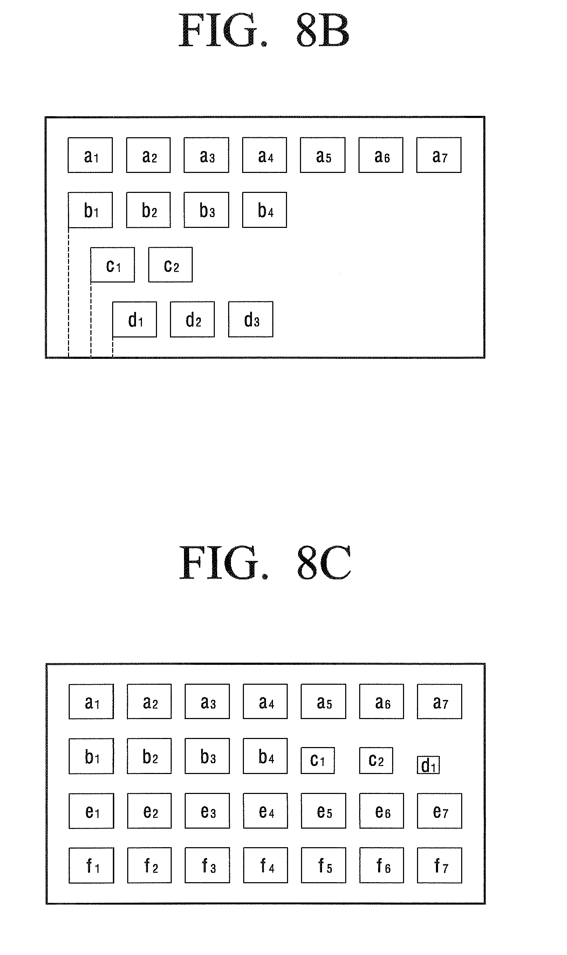

FIG. 8B exemplarily illustrates a search screen, on which files contained in folder 'A' as the lowest-level folder are arranged in a first row, files contained in folder 'B' as the lowest-level folder are arranged in a second row, files contained in folder 'C' as the lowest-level folder are arranged in a third row, and files contained in folder 'D' as the lowest-level folder are arranged in a fourth row.

As shown in FIG. 8B, a distance between the leftmost file in the folder 'A' and a left edge of the search screen is equal to a distance between the leftmost file in the folder 'B' and the left edge of the search screen.

Additionally, a distance between the leftmost file in the folder 'C' and the left edge of the search screen is greater than the distance between the leftmost file in the folder 'A' and the left edge of the search screen.

Furthermore, a distance between the leftmost file in the folder 'D' and the left edge of the search screen is greater than the distance between the leftmost file in the folder 'C' and the left edge of the search screen.

Accordingly, according to the distance between the leftmost image and the left edge of the search screen, a user may know that the folders 'A' and 'B' are in the same level in the hierarchical structure, the folder 'C' is lower in level than the folders 'A' and 'B', and the folder 'D' is lower in level than the folder 'C'.

Therefore, the above-described method enables the information regarding the hierarchical structure to be displayed on the search screen, and thus it is possible for a user to search for a desired image file more easily and conveniently.

FIG. 8C exemplarily illustrates a search screen, on which files contained in folder 'A' of the highest-level folder 'ROOT' are arranged in a first row, and files contained in folder 'B' of the highest-level folder 'ROOT' and subfolders of the folder 'B' are arranged in a second row. Additionally, files contained in folder 'E' of the highest-level folder 'ROOT' are arranged in a third row on the search screen, and files contained in folder 'F' of the highest-level folder 'ROOT' are arranged in a fourth row on the search screen.

Herein, the folders 'A', 'E' and 'F' do not contain their own subfolders, but the folder 'B' contains its folder 'C' as its subfolder. Folder 'C' contains folder 'D' as its subfolder, and thus all image files contained in the folders 'B', 'C' and 'D' may be arranged in a single row.

In this situation, the image files contained in each of the folders 'A', 'B', 'E' and 'F' are displayed at the same size on the search screen. On the other hand, the image files contained in the folder 'C' are less in size than the image files contained in each of the folders 'A', 'B', 'E' and 'F', and the image files contained in the folder 'D' are less in size than the image files contained in the folder 'C'.

Accordingly, according to the size of image files displayed on the search screen, a user may know that the folders 'A', 'B', 'E' and 'F' are in the same level in the hierarchical structure, the folder 'C' is lower in level than the folders 'A' and 'B', and the folder 'D' is lower in level than the folder 'C'.

Therefore, the above-described method also enables the information regarding the hierarchical structure to be displayed on the search screen, and thus it is possible for a user to search for a desired image file more easily and conveniently.

The information regarding the hierarchical structure is displayed according to the size or location of image files, as described above, but there is no limitation thereto. Accordingly, the exemplary embodiments of the present invention are also applicable to a situation in which the information regarding the hierarchical structure is displayed according to colors or shapes of image files, or symbols or letters attached to image files.

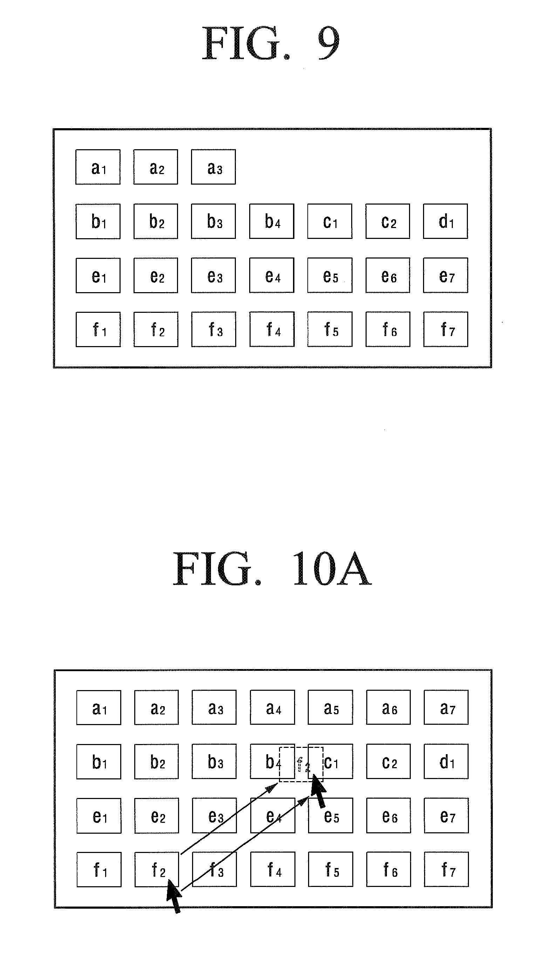

The search screen described above may be changed according to the number of image files. FIG. 9 exemplarily illustrates a search screen displayed when the number of image files is changed. When image files 'a4' to 'ag' are deleted from among image files 'a1' to 'ag' in folder 'A', the search screen shown in FIG. 9 is displayed.

Accordingly, only files 'a1' to 'a3' are displayed on a first row of the search screen shown in FIG. 9.

The image files in all the folders are displayed on a signal search screen as described above, and therefore it is possible for a user to move files between folders more freely and conveniently.

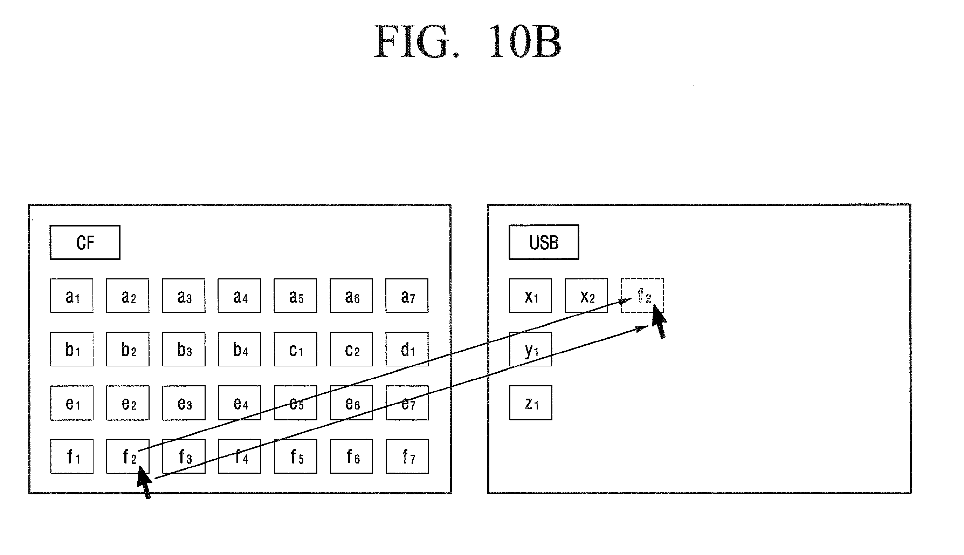

FIGS. 10A and 10B exemplarily illustrate search screens in order to explain movement of image files.

To move an image file on a search screen having a hierarchical structure, there is a need to perform a search manipulation to call a folder which contains the image file, a manipulation to copy or cut the image file found as a result of searching, and a manipulation to call a folder to which the image file is to be moved.

However, according to the exemplary embodiment of the present invention, all image files in all folders are displayed on a single search screen, and thus a user may easily move an image file in a predetermined folder to another folder through only a single, simple manipulation. For example, as shown in FIG. 10A, the user may move a file 'f2' contained in the folder 'F' to the folder 'B'.

Such movement of image files may be performed in a single storage medium, or between two or more storage media. Hereinafter, a situation in which an image file is moved between two or more storage media is described with reference to FIG. 10B.

As shown in FIG. 10B, when the electronic album 100 is connected to both the CF and the USB, two search screens are displayed on the electronic album 100.

A left search screen shows files stored in the CF, and a right search screen shows files stored in the USB.

Accordingly, using the two search screens, it is possible for a user to move a file 'f2' stored in the folder 'F' of the CF to a folder 'X' of the USB through a single, simple manipulation.

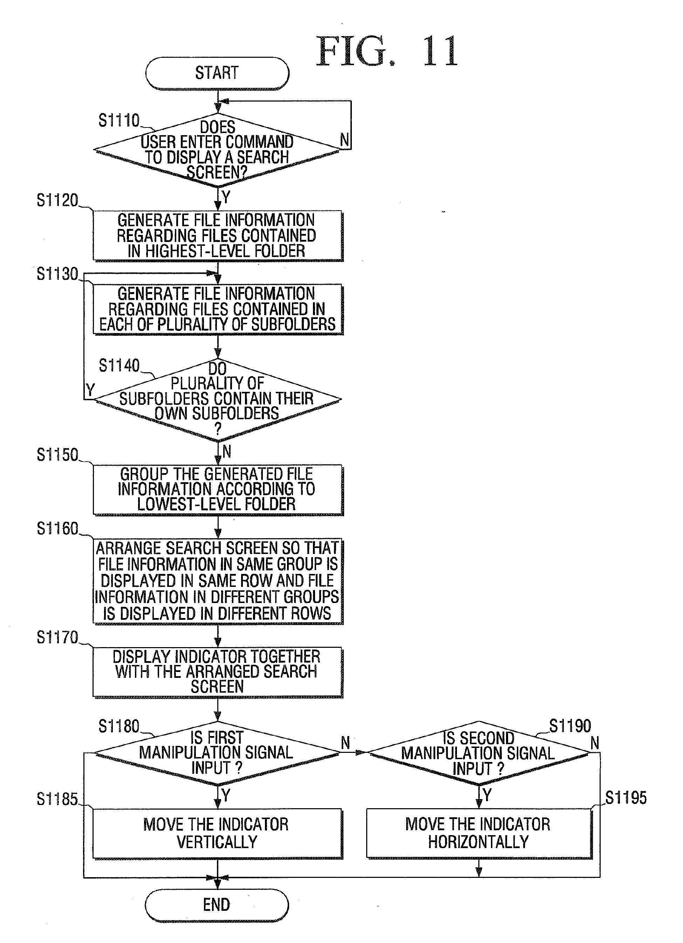

FIG. 11 is a flowchart explaining a method for providing a search screen according to another exemplary embodiment of the present invention.

First, the electronic album 100 determines whether or not a user enters a command to display a search screen (S1110). If it is determined that the user enters the command to display a search screen (S1110-Y), the electronic album 100 generates file information regarding files contained in the highest-level folder (S1120).

The electronic album 100 generates file information regarding files contained in each of a plurality of subfolders of the highest-level folder (S1130). Subsequently, the electronic album 100 determines whether or not the plurality of subfolders contain their own subfolders (S1140). If it is determined that the plurality of subfolders contain their own subfolders (S1140-Y), the electronic album 100 generates file information regarding files contained in each of the sub-subfolders of the highest-level folder (S1130). If it is determined that there is no subfolder for each of the plurality of subfolders (S1140-N), the electronic album 100 groups the generated file information according to the lowest-level folder (S1150).

Additionally, the electronic album 100 arranges the search screen so that the file information in the same group is displayed in the same row and the file information in different groups is displayed in different rows (S1160). The electronic album 100 then displays an indicator together with the arranged search screen (S1170).

Subsequently, if a first manipulation signal to change a folder is input (S1180-Y), the electronic album 100 moves the indicator vertically (S1185). If a second manipulation signal to change a file is input (S1190-Y), the electronic album 100 moves the indicator horizontally (S1195). Accordingly, folders or files are capable of being selected by a user.

Therefore, it is possible for a user to search for a desired file more quickly and to move a file between folders more easily and conveniently.

The foregoing exemplary embodiments and aspects are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for providing a search screen, the method comprising:
generating first file information regarding a plurality of first files contained in a first folder, and second file information regarding a plurality of second files contained in a second folder, the first and the second folders being of a plurality of folders having a hierarchical structure; and
displaying the first file information together with the second file information on a single search screen.

2. The method as claimed in claim 1, wherein the first folder is a highest-level folder or a folder selected by a user.

3. The method as claimed in claims 1 or 2, wherein the second folder comprises all subfolders under the first folder.

4. The method as claimed in claim 3, wherein the second file information comprises information regarding the plurality of second files contained in all the subfolders under the first folder.

5. The method as claimed in claims 1 to 4, wherein the displaying comprises grouping and displaying the first file information and the second file information according to folders of the plurality of folders.

6. The method as claimed in claim 5, wherein the first file information and the second file information are respectively grouped into a first group and a second group along a first direction and the first and the second file information in the first and the second groups are arranged in a second direction.

7. The method as claimed in claim 6, further comprising:
moving an indicator for selecting one of the first and the second groups in the first direction, if a first manipulation signal is input; and
moving an indicator for selecting one of file information contained in the selected one of the first and the second groups, in the second direction, if a second manipulation signal is input.

8. The method as claimed in claims 1 to 7, wherein the displaying comprises displaying information regarding the hierarchical structure on a single search screen.

9. The method as claimed in claims 1 to 8, wherein the displaying comprises displaying information regarding the hierarchical structure on a single search screen using at least one of a color, a size and a location of the first file information and at least one of a color, a size and a location of the second file information.

10. The method as claimed in claims 1 to 9, wherein a number of the first file information or a number of the second file information is changeable according to a number of first files contained in the first folder or a number of second files contained in the second folder.

11. The method as claimed in claims 1 to 10, wherein the plurality of first and the plurality of second files comprise a plurality of content files, and
the first file information and second file information comprise file names of the first files and file names of the second files, respectively, or thumbnail images of the first files and thumbnail images of the second files, respectively.

12. A display apparatus comprising:
a display unit which displays a search screen; and
a controller which generates first file information regarding a plurality of first files contained in a first folder, and second file information regarding a plurality of second files contained in a second folder, the first and the second folders being of a plurality of folders having a hierarchical structure, and which displays the first file information together with the second file information on a single search screen.

13. The display apparatus as claimed in claim 12, wherein the first folder is a highest-level folder or a folder selected by a user.

14. The display apparatus as claimed in claims 12 or 13, wherein the second folder comprises all subfolders under the first folder.

15. The display apparatus as claimed in claims 12 to 14, wherein the controller controls a grouping and a displaying of the first file information and the second file information according to folders of the plurality of folders.
